# EUROPÄISCHE PATENTANMELDUNG

(11) **EP 1 161 872 A2**
(43) Veröffentlichungstag der Anmeldung: **12.12.2001**
(21) Anmeldenummer: 01112298.3
(22) Anmeldetag: 19.05.2001
(51) Int. Cl.: A21D 2/18, A21D 2/14, A23L 1/0534

(54) **Verfahren zur Herstellung eines hydrophilen Cellulosederivates und das Produkt enthaltende Backwaren**

(30) Priorität: 09.06.2000 DE 10028197
(71) Anmelder: BASF AKTIENGESELLSCHAFT, 67056 Ludwigshafen (DE)
(72) Erfinder: Diener, Ralf, Dr., 67433 Neustadt (DE); Eberle, Heinrich, 67069 Ludwigshafen (DE); Seiter, Herbert, 66996 Schindhard (DE)

(57) **Zusammenfassung**

Poröse Backwaren werden mit einem Backtriebmittel, das ein hydrophiles polymeres Cellulosederivat enthält, hergestellt.

## Beschreibung

Die vorliegende Erfindung betrifft ein Verfahren zur Herstellung von porösen Backwaren.

Zur Herstellung von porösen Backwaren wird im Teig vor und/oder während des Backvorgangs ein Gas erzeugt oder der Teig mit Gas versetzt, um im fertigen Backwerk durch die Gasblasen Porosität zu erzeugen. Im einfachsten Fall wird der Teig vor dem Backen mit einem Gas, meist Luft, versetzt, etwa durch intensives Schlagen des Teigs oder eines seiner Bestandteile vor dem Vermischen. Die bekannteste Ausführungsform ist die Zugabe von Eischnee zum Teig. Es ist genauso möglich, ein Gas wie Luft durch Düsen in den Teig einzubringen. Ebenso bekannt sind Verfahren, bei denen Wasserdampf den Teig lockert, beispielsweise bei der Herstellung von Blätterteig. Das meist verwendete Gas ist jedoch Kohlendioxid oder Kohlendioxid im Gemisch mit Ammoniak und Wasserdampf. Kohlendioxid wird beispielsweise biologisch im Zuge der Vergärung von Bestandteilen des Teigs durch Hefen (Hefeteig) und/oder Milchsäurebakterien (im sogenannten Sauerteig) erzeugt. Alternativ oder zusätzlich zur Verwendung von Hefe oder Sauerteig wird Kohlendioxid, oder das Kohlendioxid-, Ammoniak- und Wasserdampfgemisch auch chemisch durch Backzusätze, sogenannte Backtriebmittel oder umgangssprachlich "Backpulver" erzeugt, die dem Teig zugesetzt werden.

Backtriebmittel enthalten im allgemeinen mindestens ein Carbonat und, falls sich dieses nicht allein durch Temperaturerhöhung zersetzt, eine saure oder säurebildende Substanz. Sie enthalten wahlweise neben Carbonat auch Carbamat (alter Name: "Carbaminat"). Das Carbonat und/oder Carbamat wird dem herzustellenden Backwerk entsprechend gewählt, beispielsweise wird für Leb- oder Honigkuchen häufig Kaliumcarbonat verwendet, für Flachbackwaren Natriumhydrogencarbonat (alter Name: "Natriumbicarbonat"), Ammoniumhydrogencarbonat ("Ammoniumbicarbonat", abgekürzt "ABC"), als alleiniges Carbonat oder im Gemisch mit Ammoniumcarbamat. Die Säure oder der Säurebildner darf - auch zusammen mit den sich nicht verflüchtigenden Resten des Carbonats oder Carbamats - den Geschmack nicht negativ beeinflussen. Typischerweise werden Verbindungen wie Weinsäure oder ihre Salze, etwa Kalium-, Natrium-, Kaliumhydrogen- und/oder Calciumtartrat, Citronensäure, Calciumhydrogenphosphat, Natriumhydrogenpyrophosphat oder Natriumaluminiumphosphat verwendet. Wenn das Backtriebmittel eine Säure oder einen Säurebildner enthält, wird ihm meist ein Trennmittel zugegeben, das die vorzeitige Kohlendioxidbildung durch Reaktion des Carbonats mit der Säure oder dem Säurebildner verhindert, üblich ist hierfür der Zusatz von Mehl oder Stärke. Die genannten Ammoniumverbindungen ABC und Ammoniumcarbaminat zersetzen sich allein durch Temperaturerhöhung auf mindestens 60 °C rückstandsfrei in Kohlendioxid, Ammoniak und Wasser. Bei typischen Backtemperaturen fallen alle drei Komponenten gasförmig an und führen daher sämtlich zu einer Erhöhung der Porosität des Backwerks. Diese Verbindungen werden daher typischerweise ohne Zusatz einer Säure oder eines Säurebildners verwendet, so dass sich der Zusatz des Trennmittels erübrigt. Dennoch wird diesen Ammoniumverbindungen häufig ein Antibackmittel (d.h., Mittel gegen das als "Verbacken", englisch "caking", bezeichnete Entstehen von Klumpen oder größeren Agglomeraten in einem Pulver, wobei die Begriffe "Verbacken" oder "Antibackmittel" außer dem Wortstamm nichts mit der Herstellung von Backwaren, Gebäck oder dem Begriff "Backtriebmittel" für Stoffe, die zu Porosität im Backwerk führen, zu tun hat) zugesetzt. Als Antibackmittel werden hierfür üblicherweise Maismehl, Magnesiumoxid oder Magnesiumcarbonat verwendet.

Ullmanns Encyklopädie der technischen Chemie, 3. Auflage, Urban & Schwarzenhäuser, München - Berlin 1953, Stichwort "Backpulver" oder Ullmann's Encyclopedia of Industrial Chemistry, Sixth Ed., 1999 Electronic Release, Wiley-VCH, Weinheim 1999, Stichwort "Bread and other baked Products", dort Punkt 2.6: "Leavening Agents", geben einen zusammenfassenden Überblick über die bekannten Verfahren zur Herstellung poröser Backwaren unter Verwendung von Backtriebmitteln. Die Herstellung von Ammoniumverbindungen wie Ammoniumcarbonat, -bicarbonat und -carbaminat durch Umsetzung von dem gewünschten Produkt entsprechenden Mengen Ammoniak und Kohlendioxid in wäßriger Mutterlauge, bei dem Produkt entsprechend gewählten Drücken und Temperaturen, gefolgt von Abtrennung und Trocknung des Niederschlags, ist ebenso seit langem bekannt und beispielsweise in Ullmann's Encyclopedia of Industrial Chemistry, Sixth Ed., 1999 Electronic Release, Wiley-VCH, Weinheim 1999, Stichwort "Ammonium Compounds", insbesondere Punkt 4.: "Ammonium Carbonates", beschrieben. Die Herstellung der Alkalicarbonate und -hydrogencarbonate ist ebenso bekannt.

Bei den bekannten Backverfahren unter Verwendung üblicher Backtriebmittel treten immer wieder Probleme auf, weil gelegentlich unerwünscht große Gasblasen und in Folge davon große Hohlräume im Backwerk entstehen, die über das gewünschte Porenvolumen der Poren im Backwerk weit hinausgehen. Dies führt zu einem unerwünscht hohen Anteil an Ausschuss, da solches Backwerk zwar einzelne sehr große Hohlräume, aber ansonsten überwiegend Bereiche mit unerwünscht niedriger Porosität enthält, was es hart und häufig auch unansehnlich macht.

Es ist bekannt, anorganische Salze mit Antibackmitteln zu vermischen, die ein Verbacken der Partikel verhindern oder verringern. Diese Technik wird beispielsweise bei Düngemitteln angewendet, die aufgrund der nur saisonalen Verwendung vergleichsweise lagerstabil sein müssen.

DD-A-117 787 lehrt, dass Haufwerke von Harnstoffgranalien (Korngröße von 1 bis 2,5 mm, sogenannte Prills) durch Behandlung mit Leimen auf Basis Carboximethylcellulose, die mit Füllstoffen wie Calciumcarbonat oder Calciumoxid vermischt sind, stabilisiert werden können. US 3,388,990 offenbart Düngersubstanzen wie Harnstoff, Ammoniumnitrat, Ammoniumphosphat, Ammoniumsulfat, Ammoniumchlorid, Kaliumchlorid, Kalk-Superphosphat und ihre Mischungen, die mit synthetischen Polymeren wie etwa Carboximethylcellulose oder Methylcellulose und einer oberflächenaktiven Substanz behandelt werden; und US 5,472,476 lehrt vergleichbare Zusammensetzungen, in denen die oberflächenaktive Substanz ein Alkylphosphorsäureester ist. Gemäß der Lehre von EP-A-246 719 wird Hydroxipropylcellulose, Natriumcarboximethylcellulose oder Hydroxipropylmethylcellulose als Hilfsstoff in mit einem nicht wasserlöslichen Polymer überzogenen Düngemitteln, wie Harnstoff, Ammoniumsulfat, Ammoniumnitrat, Ammoniumchlorid oder Mischdüngern verwendet. SU-A-1570255 (im Original unpubliziert, siehe Derwent-Abstract 94-041345/05) betrifft die Verwendung von mit Natriumcarboximethylcellulose und einer oberflächenaktiven Verbindung behandeltem Carbamid zur Herstellung von Mineraldüngern.

DE-A-28 21 703 lehrt Salzmischungen aus Ammonium-, Alkali- und Calciumsalzen anorganischer Säuren und Harnstoff, deren Salzteilchen mit einem 0,1 bis 50 m dicken Schutzfilm gegen die Aufnahme von Feuchtigkeit überzogen sind. Als Schutzfilm können unter anderem Polysaccharide und ihre Derivate verwendet werden, insbesondere sind Stärke, Cellulose, Manna, Natriumalginat, Methylcellulose, Carboximethylstärke und Carboximethylcellulose genannt. EP-A-461 886 offenbart ein Verfahren zum Überziehen von Partikeln aus Piperazin, Triethylendiamin, Ammoniumsulfat, Ammoniumchlorid oder Natriumchlorid mit wasserlöslichen Celluloseestern, und WO-A-98/56595 offenbart Pulver zur Zubereitung von Lösungen für lithographische Druckverfahren, wobei die Pulver Ammonium- oder Alkalimetallphosphate, ein festes Polysaccharid, beispielsweise Cellulose oder Carboximethylcellulose, und ein Konservierungsmittel enthalten.

DE-A-24 35 008 lehrt ein Verfahren zum Überziehen von wasserlöslichen oder dispergierbaren Partikeln, insbesondere Enzymen, mit einem filmbildenden Polymer wie Methylcellulose, Hydroxibutylmethylcellulose, Natriumcarboximethylcellulose, Hydroxiethylmethylcellulose oder Hydroxipropylmethylcellulose durch Zerstäubung einer wäßrigen Lösung des Polymers in einem Fließbettreaktor, in dem die zu überziehenden Partikel vorgelegt sind. WO-A-94/24860 offenbart Fungizidzusammensetzungen, die neben Alkalimetall- und/ oder Ammoniumbicarbonat, Alkalimetall- und/oder Ammoniumsalze von C₁₀-C₂₂-Fettsäuren und wasserlöslichen filmbildenden Polymeren wie etwa Methylcellulose oder Carboximethylcellulosesalzen auch ein zur Verhinderung der Verbackung des Pulvers verwendetes Antibackmittel wie Magnesiumsilikat enthalten. US 5,468,716 offenbart ähnliche Fungizidzusammensetzungen, die darüber hinaus noch Phosphorverbidungen enthalten. WO-A-94/24994 und US 5,482,702 lehren Agglomerate von wasserlöslichen anorganischen Salzen wie Ammoniumbicarbonat in mikrokristalliner Form, die von einem hydrophilen Polymer wie Methylcellulose oder Carboximethylcellulose überzogen sind. Zubereitung dieser überzogenen Agglomerate enthalten außerdem Antibackmittel wie beispielsweise Magnesiumsilikat. US 5,482,720 betrifft ähnliche Zusammensetzungen, die neben Carbonat mindestens eine weitere kristalline anorganische Verbindung enthalten. Auch diese Zusammensetzungen können ein weiteres Antibackmittel wie Magnesiumsilikat enthalten. WO-A-96/35408 und WO-A-97/30686 offenbaren Deodorants, in denen ein von einem Polymer, beispielsweise einem Cellulosederivat überzogene Bicarbonatteilchen enthalten sind, und in denen entweder separat oder als Adsorbat der Bicarbonatteilchen Duftstoffe enthalten sind.

Es stellt sich die Aufgabe, ein Verfahren zur Herstellung von porösen Backwaren zu finden, das die eingangs geschilderten Nachteile, insbesondere die Bildung von unerwünscht großen Hohlräumen, nicht aufweist.

Dementsprechend wurde ein Verfahren zur Herstellung von porösen Backwaren unter Verwendung eines Backtriebmittels gefunden, das dadurch gekennzeichnet ist, dass man ein Backtriebmittel einsetzt, dass mindestens ein hydrophiles polymeres Cellulosederivat enthält.

Das erfindungsgemäße Verfahren führt zu porösen Backwaren, die gleichmäßig feinporös sind und keine unerwünscht großen Hohlräume aufweisen.

Die mit dem erfindungsgemäßen Verfahren hergestellten porösen Backwaren sind übliche poröse Backwaren, beispielsweise Brot, Brötchen, Brezeln, Kuchen, Honigkuchen, Lebkuchen, Kekse, Waffeln, Cookies, Salzstangen, Gebäck oder ähnliches. Vorzugsweise werden mit dem erfindungsgemäßen Verfahren Flachbackwaren hergestellt, also Backwaren, die in mindestens einer Raumrichtung vergleichsweise geringe Ausdehnung aufweisen, wie beispielsweise Lebkuchen, Kekse, Waffeln, Cookies, Salzstangen oder Gebäck .

Im erfindungsgemäßen Verfahren wird ein Backtriebmittel eingesetzt. Das Backtriebmittel enthält mindestens ein Carbonat. Wahlweise enthält es zusätzlich mindestens ein Carbamat. Als Carbonat und gegebenenfalls als Carbamat wird oder werden solche Carbonate oder Carbamate gewählt, deren Verwendung in Nahrungsmitteln unbedenklich ist und die ebenso wie ihre Zersetzungsprodukte nicht zu unangenehmen Geschmack der fertigen Backwaren führen. Geeignete Carbonate, die einzeln oder im Gemisch enthalten sind, sind beispielsweise die Alkalicarbonate und -hydrogencarbonate, insbesondere Natriumcarbonat, Natriumhydrogencarbonat, Kaliumcarbonat und Kaliumhydrogencarbonat sowie Ammoniumcarbonat und Ammoniumhydrogencarbonat. Geeignete Carbamate sind beispielsweise Natrium-, Kalium- und Ammoniumcarbamat. Ebenso geeignet ist das üblicherweise als "Hirschhornsalz" bezeichnete Gemisch aus Ammoniumcarbonat und Ammoniumhydrogencarbonat, das zusätzlich auch Ammoniumcarbamat enthalten kann. Vorzugsweise ist das Carbonat Ammoniumhydrogencarbonat und/oder Hirschhornsalz und das Carbamat, falls vorhanden, Ammoniumcarbamat. (Ein 1 : 1-Gemisch aus Ammoniumhydrogencarbonat und Ammoniumcarbamat wird gelegentlich ebenfalls als "Ammoniumcarbonat" bezeichnet.) In ganz besonders bevorzugter Weise ist das Carbonat Ammoniumhydrogencarbonat, das frei von absichtlich zugesetztem Carbamat ist.

Wenn das eingesetzte Backtriebmittel Komponenten enthält, die sich beim Erwärmen auf typische Backtemperaturen nicht oder nicht ausreichend zersetzen, enthält das Backtriebmittel zusätzlich eine Säure oder einen Säurebildner. Die Säure oder der Säurebildner ist eine für diesen Verwendungszweck bekannte Verbindung oder Verbindungsgemisch, beispielsweise Kalium-, Natrium-, Kaliumhydrogen- und/oder Calciumtartrat, Citronensäure, Calciumhydrogenphosphat, Natriumhydrogenpyrophosphat und/oder Natriumaluminiumphosphat. Wenn das Backtriebmittel eine Säure oder einen Säurebildner enthält, wird ihm vorzugsweise auch ein Trennmittel zugegeben, das die vorzeitige Kohlendioxidbildung durch Reaktion des Carbonats mit der Säure oder dem Säurebildner verhindert. Derartige Trennmittel sind bekannt, bevorzugt sind Mehl und/oder Stärke.

In besonders bevorzugter Weise besteht das Backtriebmittel aus dem hydrophilen Cellulosederivat und Ammoniumhydrogencarbonat.

Die mittleren Partikeldurchmesser der eingesetzten Carbonate und, falls vorhanden, Säuren oder Säurebildner liegen im allgemeinen bei höchstens 1000 µm, vorzugsweise unterhalb von 700 µm und in besonders bevorzugter Weise bei höchstens 500 µm. Sie liegen im allgemeinen oberhalb von 50 µm, vorzugsweise oberhalb von 75 µm und in besonders bevorzugter Weise oberhalb von 150 µm.

Das Backtriebmittel enthält mindestens ein hydrophiles Cellulosederivat. Das Cellulosederivat wird aus offensichtlichen Gründen so gewählt, dass sowohl es selbst wie auch etwaige thermische Abbauprodukte in den typischerweise enthaltenen oder entstehenden Mengen als Lebensmittelzusatzstoff geeignet ist, und die hergestellten Backwaren geschmacklich nicht beeinträchtigt. Vorzugsweise wird ein Cellulosederivat verwendet, das geschmacksneutral und lebensmittelrechtlich zugelassen ist.

Das hydrophile Cellulosederivat ist im allgemeinen ein polymeres Cellulosederivat. Unter "polymeres Cellulosederivat" ist im Rahmen dieser Erfindung zu verstehen, dass das Cellulosederivat ein Makromolekül ist, dass im wesentlichen die polymere beta-glucosidische Grundstruktur der Cellulose aufweist. Die mittlere Molmasse liegt im allgemeinen über 2 000, vorzugsweise über 10 000 und in besonders bevorzugter Weise über 20 000.

Geeignete Cellulosederivate sind beispielsweise Celluloseether. Dies sind Cellulosederivate, die formal durch Substitution von Wasserstoffatomen an den Hydroxigruppen der Cellulose durch Alkyl- und/oder Arylalkylgrupen hervorgehen, wobei diese Alkyl- und/oder Arylalkylgruppen durch funktionelle nichtionische, anionische und/oder kationische Gruppen substituiert sein können. Die Alkylgruppen sind üblicherweise C1- C8 Alkylgruppen, die geradkettig oder verzweigt sein können. Vorzugsweise ist die Alkylgruppe eine C1-C4-Alkylgruppe, beispielsweise Methyl, Ethyl, n-Propyl, iso-Propyl, n-Butyl, sec.-Butyl, iso-Butyl oder tert.-Butyl. Die Alkylgruppe kann mit einem aromatischen Rest zur Arylalkylgruppe substituiert sein, beispielsweise mit einem Phenylrest. Eine bevorzugte Arylalkylgruppe ist Benzyl. Die Alkyl- oder Arylalkylgruppe kann funktionell substituiert sein, beispielsweise mit Hydroxi-, Carboxi- oder Carboxilatgruppen. Sofern Carboxilatgruppen enthalten sind, sind auch entsprechende Gegenionen enthalten, beispielsweise Alkaliionen wie Natrium oder Kalium, oder Ammoniumionen. Ist nur von "Carboximethylcellulose" (oft als "CMC" abgekürzt) die Rede, ist üblicherweise Natrium-carboximethylcellulose gemeint (gelegentlich auch als "Na-CMC" abgekürzt). Es können auch Cellulose-mischether verwendet werden, die mehr als eine Art Alkyl- Arylalkyl- oder funktionell substitutierte Alkylgruppe enthalten.

Bevorzugte hydrophile polymere Cellulosederivate sind Methyl-Ethyl-, Propyl-, Carboximethyl- Hydroxiethyl-, Hydroxipropyl- Methylhydroxidethyl-, Methylhydroxipropyl-, Methylhydroxibutyl-, Ethylhydroxidethyl-, Carboximethylhydroxiethyl- und/oder Benzylcellulose. Unter den Carboximethylcellulosen ist die Natriumverbindung bevorzugt. In besonders bevorzugter Weise enthält das Backtriebmittel Natriumcarboximethylcellulose, und in weiterhin besonders bevorzugter Weise enthält das Backtriebmittel Na-CMC als alleiniges hydrophiles polymeres Cellulosederivat.

In besonders bevorzugter Weise besteht das Backtriebmittel aus Ammoniumhydrogencarbonat und Na-CMC.

Die Celluloseether werden auf bekanntem Wege hergestellt, typischerweise durch Einwirkung von Alkyl- oder Arylalkylhalogeniden, Epoxiden oder aktivierten Olefinen auf mit Basen (beispielsweise Natronlauge) aktivierte Cellulose. Celluloseether sind gängige Handelswaren, die - auch in Lebensmitteln - üblicherweise als Verdickungsmittel verwendet werden. Celluloseether sind beispielsweise unter der Marke "Tylose", hochreine Celluloseether für Lebensmittelanwendungen unter der Marke "Tylopur", hochreine Na-CMC unter der Marke "Tylopur C" von Clariant GmbH erhältlich.

In bevorzugter Weise enthält das Backtriebmittel Cellulosederivate, die in 1,8 Gew.-%iger wäßriger Lösung eine Viskosität, gemessen nach Brookfield bei 20 °C und 20 °dH von mindestens 200, vorzugweise mindestens 400 und in besonders bevorzugter Weise mindestens 450, sowie höchstens 1200, vorzugsweise höchstens 1000, und in besonders bevorzugter Weise höchstens 800 mPa s aufweisen.

Das Cellulosederivat ist im allgemeinen in einer Menge von mindestens 100, vorzugsweise mindestens 300, und in besonders bevorzuger Weise mindestens 500 Gew.-ppm, beispielsweise 1000 Gew.-ppm, bezogen auf die Gesamtmenge des Backtriebmittels, enthalten. Die Steigerung der Menge über einen Höchstwert, dessen Überschreitung keine weiteren Verbesserungen zeigt, und der - abhängig von der zu backenden Teigmischung in wenigen Routineversuchen leicht zu ermitteln ist, ist schon aus wirtschaftlichen Gründen nicht sinnvoll. Eine sensorische Beeinträchtigung wird erst bei außerordentlich hohen Mengen beobachtet. Im allgemeinen liegt der Gehalt an Cellulosederivat unter 1, vorzugsweise unter 0,5 und in besonders bevorzugter Weise unter 0,2 Gew.-%, bezogen auf die Gesamtmenge des Backtriebmittels.

Hergestellt wird das cellulosederivathaltige Backtriebmittel durch Zugabe des Cellulosederivats oder der Cellulosederivate während oder nach der Herstellung des Carbonats, Hydrogencarbonats oder Carbamats. Das Cellulosederivat wird entweder vor oder während der Herstellung des Carbonats, Hydrogencarbonats oder Carbamats der Mutterlauge, in der das Carbonat, Hydrogencarbonat oder Carbamat hergestellt und auskristallisiert wird, zugesetzt, oder nach der Reaktion, aber vor der Abtrennung des gebildeten Feststoffs zugesetzt. Wahlweise wird das Cellulosederivat in wäßriger Lösung in ein bewegtes Bett des festen Carbonats, Hydrogencarbonats oder Carbamats eingetragen, etwa durch Sprühen. Dies kann beispielsweise in einem Trockner (Schaufeltrockner, Drehrohr) oder in einem Wander- Fließ- oder Wirbelbett durchgeführt werden. Es ist ebenso möglich, festes kristallines Carbonat und/ oder Carbamat mit festem, pulverförmigem Cellulosederivat trocken zu vermischen; bei diesem Verfahren ist zur Erzielung eines befriedigenden Ergebnisses meist ein unbefriedigend hoher Aufwand nötig. Besonders bevorzugt ist die Zugabe des Cellulosederivats zur Mutterlauge, aus der das Carbonat oder Carbamat auskristallisiert wird. Bei der - ansonsten seit langem bekannten - Herstellung von Ammoniumverbindungen wie Ammoniumcarbonat, -bicarbonat und -carbaminat durch Umsetzung von dem gewünschten Produkt entsprechenden Mengen Ammoniak und Kohlendioxid in wäßriger Mutterlauge, bei dem Produkt entsprechend gewählten Drücken und Temperaturen, gefolgt von Abtrennung und Trocknung des Niederschlags, wird dazu das Cellulosederivat in die wäßrige Mutterlauge gegeben.

Die zugesetzte Menge des Cellulosederivats ist so einzustellen, dass das fertige Produkt den gewünschten Gehalt an Cellulosederivat aufweist, was in Kenntnis der Massenbilanz des verwendeten Herstellverfahrens eine triviale Rechenaufgabe ist. Beim Sprühen wäßriger Lösungen ist im allgemeinen ein Gehalt von höchstens 2, vorzugsweise 2 und in besonders bevorzugter Weise höchstens 1,5 Gew.-% des Cellulosederivats in Wasser einzustellen, um das Sprühverhalten nicht durch zu hohe Viskosität zu beeinträchtigen. Der Gehalt der Sprühlösung an Cellulosederivat beträgt im allgemeinen mindestens 0,2, vorzugsweise mindestens 0,4 und in besonders bevorzugter Weise mindestens 0,5 Gew.-%, um eine befriedigende Wirtschaftlichkeit sicherzustellen.

Dem Backtriebmittel können wahlweise neben dem Cellulosederivat weitere Hilfsstoffe zugesetzt werden; beispielsweise bekannte Antibackmittel wie Maismehl, Magnesiumoxid und/oder Magnesiumcarbonat oder bekannte Trennmittel wie Salze von Fettsäuren, beispielsweise Stearinsäure, Calicum- und/oder Magnesiumstearat. Es ist jedoch ein Vorzug des erfindungsgemäßen Verfahrens, dass auf solche Zusätze verzichtet werden kann.

Das erfindungsgemäße Verfahren wird wie bekannte Verfahren zur Herstellung von Backwaren auf übliche Weise durchgeführt, mit dem einzigen Unterschied, dass das eingesetzte Backtriebmittel mindestens ein hydrophiles polymeres Cellulosederivat enthält. Im allgemeinen wird dazu ein Teig zubereitet, der üblicherweise eine Stärkequelle wie Mehl und/oder Kartoffelstärke, eine Proteinquelle wie Eiweiß, häufig Fette wie Butter, Öl und/oder Margarine, und meist weitere Zutaten wie Zucker, Gewürze, Früchte oder ähnliches enthält. Die Zutaten werden üblicherweise intensiv mechanisch vermischt, beispielseise durch Rühren oder Kneten. Neben dem Backtriebmittel können weitere Zutaten verwendet werden, die ebenfalls zu Porosität in den erzeugten Backwaren führen, beispielsweise Hefe und/oder Sauerteig, ebenso kann die Porosität durch Einblasen von Gasen wie Luft in den Teig erhöht werden. Das Backtriebmittel kann wahlweise auch vor der eigentlichen Teigzubereitung mit einzelnen Komponenten des Teigs vorvermischt werden. Es kann ferner mit trockenen Komponenten des Teigs, beispielsweise Mehl, Zucker, Gewürzen, sonstigen Geschmacksstoffen und/oder Trockenei zu einer Backmischung vermischt werden, aus der durch Zugabe von Flüssigkeit ein Teig hergestellt und anschließend gebacken wird.

Die Menge des zugesetzten, mindestens ein polymeres hydrophiles Cellulosederivat enthaltenden Backtriebmittels wird so gewählt, dass die gewünschte Porosität eingestellt wird, dies ist mittels weniger Routineversuche leicht zu optimieren. Üblicherweise wird die Menge so gewählt, dass pro 100 g der eingesetzten Stärkequelle (z. B. Mehl und/oder Kartoffelstärke) mindestens 1,5, vorzugsweise mindestens 2 und in besonders bevorzugter Weise mindestens 2,35, sowie höchstens 3,5, vorzugsweise höchstens 3 und in besonders bevorzugter Weise höchstens 2,85 g Gase (Kohlendioxid, Ammoniak und/oder Wasserdampf) entwickelt werden. Werden unporösere Backwaren hergestellt, ist die Menge entsprechend zu verringern, und für porösere entsprechend zu erhöhen.

## Patentansprüche

1. Verfahren zur Herstellung von porösen Backwaren unter Verwendung eines Backtriebmittels, **dadurch gekennzeichnet, dass** man ein Backtriebmittel einsetzt, dass mindestens ein hydrophiles Cellulosederivat enthält.

2. Verfahren nach Anspruch 1, **dadurch gekennzeichnet, dass** das hydrophile Cellulosederivat ein Celluloseether ist.

3. Verfahren nach Anspruch 1, **dadurch gekennzeichnet, dass** das hydrophile Cellulosederivat Natriumcarboximethylcellulose ist.

4. Verfahren nach Anspruch 1, **dadurch gekennzeichnet, dass** das hydrophile Cellulosederivat in einer Menge von mindestens 500 Gew.-ppm, bezogen auf das Gesamtgewicht des Backtriebmittels, enthalten ist.

5. Verfahren nach Anspruch 1, **dadurch gekennzeichnet, dass** das Backtriebmittel Natriumcarbonat, Natriumhydrogencarbonat, Kaliumcarbonat, Kaliumhydrogencarbonat, Ammoniumcarbonat, Ammoniumhydrogencarbonat und/oder Ammoniumcarbamat enthält.

6. Verfahren nach Anspruch 5, **dadurch gekennzeichnet, dass** das Backtriebmittel Ammoniumhydrogencarbonat und Natriumcarboximethylcellulose enthält.

7. Verfahren nach Anspruch 6, **dadurch gekennzeichnet, dass** das Backtriebmittel aus Ammoniumhydrogencarbonat und Natriumcarboximethylcellulose besteht.

8. Verfahren zur Herstellung von ein hydrophiles Cellulosederivat enthaltendem Ammoniumcarbonat, -bicarbonat oder -carbaminat durch Umsetzung von Ammoniak und Kohlendioxid in wäßriger Mutterlauge, Abtrennung und Trocknung des entstandenen Ammoniumcarbonats, -bicarbonats oder -carbaminats, **dadurch gekennzeichnet, dass** man das hydrophile Cellulosederivat der wäßrigen Mutterlauge zusetzt.

9. Verfahren nach Anspruch 8, **dadurch gekennzeichnet, dass** man als Cellulosederivat Natriumcarboximethylcellulose zusetzt.

10. Verfahren nach den Ansprüchen 8 oder 9, **dadurch gekennzeichnet, dass** man das Cellulosederivat in einer Menge von mindestens 500 Gew.-ppm und höchstens 0,2 Gew.-%, bezogen auf das hergestellte, das Cellulosederivat enthaltende Ammoniumcarbonat, -bicarbonat oder -carbamat, zusetzt.
